# FASCICULE DE BREVET EUROPEEN

(11) **EP 0 271 122 B1**
(45) Date de publication et mention de la délivrance du brevet: **03.03.1993**
(21) Numéro de dépôt: 87202131.6
(22) Date de dépôt: 04.11.1987
(51) Int. Cl.: H04N 11/00

(54) **Système pour transmettre des images de télévision haute définition dans des canaux à bande étroite, ainsi qu'un émetteur et un récepteur convenant pour le système**
Verfahren zur Übertragung von Hochauflösungsfernsehbilder in engen Bandkanälen und Sender und Empfänger dafür
System for transmitting high-definition television pictures through narrow band channels, and a transmitter and a receiver suitable therefor

(30) Priorité: 07.11.1986 FR 8615530
(43) Date de publication de la demande: 15.06.1988
(73) Titulaire: LABORATOIRES D'ELECTRONIQUE PHILIPS, 94450 Limeil-Brévannes (FR); Philips Electronics N.V., 5621 BA Eindhoven (NL)
(72) Inventeur: Fonsalas, Frédéric Société Civile S.P.I.D., F-75007 Paris (FR); Lejard, Jean-Yves Société Civile S.P.I.D., F-75007 Paris (FR); Hayet, Pascal Société Civile S.P.I.D., F-75007 Paris (FR); Le Queau, Marcel Société Civile S.P.I.D., F-75007 Paris (FR)
(74) Mandataire: Chaffraix, Jean

(56) Documents cités:
- EP-A- 0 146 713
- GLOBECOM' 85 - IEEE GLOBAL TELECOMMUNICATIONS CONFERENCE - COMMUNICATION TECHNOLOGY TO PROVIDE NEW SERVICES, New Orleans, 2-5 décembre 1985, vol. 1, pages 113-117, IEEE, New York, US; T. FUKINUKI et al.: "NTSC-full-compatible extended-definition TV - proto model and motion adaptive processing"
- NHK LABORATORIES NOTE, no. 304, septembre 1984, pages 1-12, NHK, Tokyo, JP; Y. NINOMIYA et al.: "A single channel HDTV broadcast system - the muse"

## Description

La présente invention concerne un système pour transmettre des images de télévision, dans lequel une partie émission comporte un organe pour fournir des informations d'images, des filtres anti-repliement pour filtrer lesdites informations d'images, un analyseur de mouvement d'image pour fournir à partir des informations d'images une grandeur représentant le mouvement dans celles-ci, un organe de sortie des filtres anti-repliement pour relier l'entrée d'un circuit de sous-échantillonnage aux sorties des filtres, organe commandé à partir de la grandeur représentant le mouvement, un circuit multiplexeur d'informations pour multiplexer les échantillons d'image provenant du circuit de sous-échantillonnage avec une information de seuils élaborée par un organe à seuils prévu pour traiter la grandeur représentant le mouvement et un circuit émetteur pour transmettre sur un canal de transmission les informations fournies par ledit multiplexeur, système dans lequel une partie réception comporte un circuit récepteur pour recevoir les informations transmises, un circuit démultiplexeur pour reconstituer à partir des informations transmises, d'une part les échantillons d'images et d'autre part l'information de seuil dudit circuit à seuils, des filtres d'interpolation pour fournir des suréchantillons par suréchantillonnage des échantillons d'image transmis, un organe de sortie des filtres d'interpolation pour fournir l'information utile en fonction de ladite information de seuil transmise.

La présente invention concerne aussi un émetteur et un récepteur convenant pour le système.

Un tel système trouve d'importantes applications pour la transmission d'image de télévision à haute définition. Le problème d'une telle transmission est que l'on s'impose d'utiliser des canaux de transmission présentant une bande passante étroite. Cette bande passante ne permet pas de transmettre toutes les informations de l'image captée au niveau des studios. Il faut donc trier ces informations et ne transmettre que celles qui permettront au côté réception d'établir une image de la meilleure qualité possible.

Dans un article de Yuichi Ninomiya et al. intitulé "A Single Channel HDTV Broadcast System-The Muse" paru dans NHK Laboratories, note série 304 de septembre 1984 et dans la demande de brevet européen EP-A-0 146 713, on décrit un système du genre mentionné qui fournit une solution pour résoudre ce problème. La batterie de filtres anti-repliement se compose alors de deux filtres dont un est affecté aux images fixes et l'autre aux images mobiles.

Le document WO-A-87/04034 décrit aussi un tel système, muni aussi de deux filtres.

L'inconvénient de ces systèmes connus réside dans la disparité de la définition des images transmises dans le cas où celles-ci comportent des scènes fixes et dans le cas où celles-ci comportent des scènes mobiles. En effet, cette définition varie du simple au double dans les deux cas, ce qui est particulièrement visible lorsque les mouvements sont de faible ampleur et concernent une grande partie de l'image.

La présente invention propose un système du genre précité qui surmonte dans une large mesure cet inconvénient.

Pour cela, un système pour transmettre des images de télévision, est remarquable en ce que dans la partie émission le nombre des filtres anti-repliement est au moins trois et l'organe à seuils agit aussi sur l'organe de sortie des filtres anti-repliement, et dans la partie réception le nombre des filtres d'interpolation est au moins trois et le circuit démultiplexeur applique l'information de seuils transmise à une commande de l'organe de sortie des filtres d'interpolation, tandis que les organes de sortie des filtres de la partie émission et de la partie réception sont des commutateurs.

La présente invention propose aussi un récepteur comprenant :
- des premiers moyens pour recevoir des composantes d'information,
- des deuxièmes moyens couplés auxdits premiers moyens pour démultiplexer lesdites composantes d'information afin de fournir, d'une part des composantes d'information d'image et d'autre part des informations de commande de filtrage,
- des troisièmes moyens pour suréchantillonner et pour effectuer un filtrage d'interpolation desdites composantes d'information d'image selon au moins trois caractéristiques de filtrage différentes afin de fournir des signaux d'image interpolés et,
- des moyens de sortie pour sélectionner en fonction de l'information de commande de filtrage les signaux d'images interpolés selon l'une desdites caractéristiques,
et un procédé pour former un signal d'image de télévision mettant en oeuvre les étapes suivantes :
- élaboration de composantes d'informations d'images,
- élaboration d'informations de commande de filtrage à partir desdites composantes d'information d'image,
- élaboration de signaux d'images filtrés obtenus par filtrage anti-repliement pour lesdites composantes d'informations d'images selon une caractéristique de filtrage sélectionnée en fonction desdites informations de commande de filtrage, d'au moins trois caractéristiques de filtrage différentes,
- élaboration de signaux d'image sous-échantillonnés obtenus par sous-échantillonnage des signaux d'images filtrés et, enfin,
- élaboration du signal d'image de télévision obtenu par multiplexage de l'information de commande de filtrage avec les signaux d'image sous-échantillonnés.

La description suivante en regard des dessins annexés, le tout donné à titre d'exemple non limitatif, fera mieux comprendre comment l'invention peut être réalisée.

La figure 1 représente le système pour transmettre des images conformes à l'invention.

La figure 2 montre la structure générale des filtres utilisés par l'invention.

La figure 3 montre les caractéristiques de transfert des filtres utilisés dans un mode de réalisation préféré de l'invention.

La figure 4 montre, selon un mode de réalisation préféré, un circuit de sous-échantillonnage.

La figure 5 est destinée à l'explication du sous-échantillonnage.

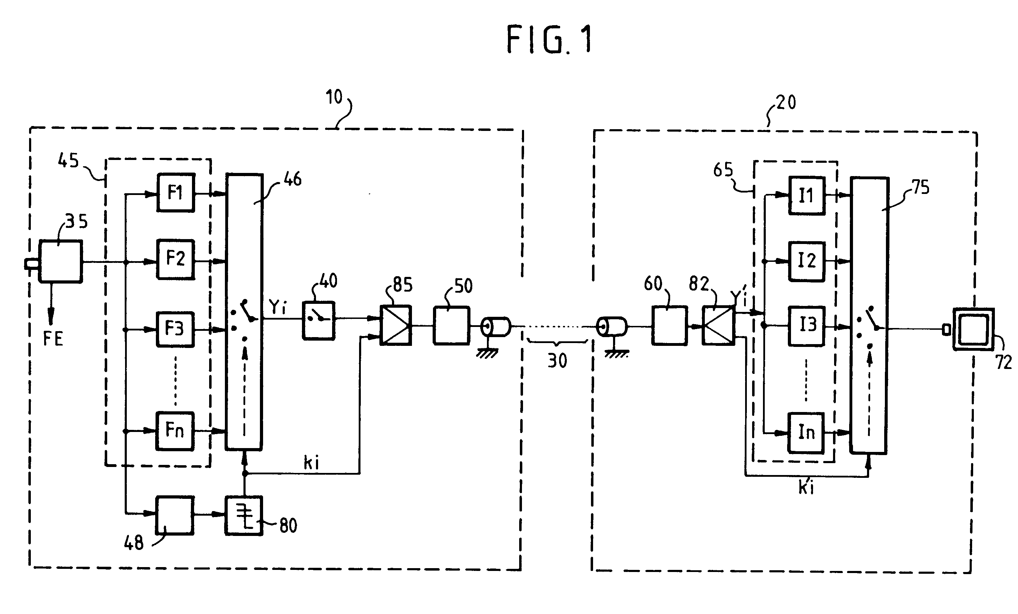

Le système de l'invention montré à la figure 1 se compose de deux parties : une partie émission portant la référence 10 et une partie réception 20. Ces deux parties sont reliées par un canal de transmission 30. Les images à transmettre sont captées par une caméra de télévision à haute définition 35 qui analyse la scène par un balayage de 1250 lignes à un rythme de 50 images par seconde. La caméra fournit trois signaux : le signal de luminance Y et les signaux de différence de couleur U et V. Pour simplifier les explications on ne s'intéresse qu'au signal de luminance, étant entendu que les traitements qui vont être explicités ci-dessous s'appliquent aussi aux signaux U et V. Ce signal Y de sortie de cette caméra est ensuite échantillonné. Les échantillons sont alors produits à une cadence de 108 MHz. Comme la transmission ne tolère qu'un débit de 13,5 MHz on doit donc effectuer un sous-échantillonnage au moyen d'un sous-échantillonneur 40, c'est-à-dire que parmi tous les échantillons provenant de la caméra, seuls quelques-uns seront transmis. Avant de subir ce traitement, les échantillons issus de la caméra doivent subir l'opération de filtrage anti-repliement pratiquée par une batterie de filtres 45. Un organe de sortie de filtres 46 permet de transmettre les signaux de sortie du banc 45 vers le sous-échantillonneur 40. Cet organe de sortie est commandé à partir d'une grandeur de commande élaborée par un analyseur de mouvement 48. Après le sous-échantillonnage les échantillons sont encore traités par un circuit émetteur 50 pour les adapter au canal de transmission 30.

Ces échantillons sont ensuite reçus par la partie réception 20 ; ils sont restitués sous leur forme initiale par un circuit récepteur 60. Ces échantillons restitués doivent subir l'opération de suréchantillonnage apportée par une batterie de filtres d'interpolation 65. Il est rappelé que l'opération de suréchantillonnage consiste à élaborer des échantillons supplémentaires à partir des échantillons transmis par interpolation. Ces techniques de sous-échantillonnage et suréchantillonnage sont décrites dans le chapitre X de l'ouvrage intitulé "Traitement numérique du signal" de M.Bellanger, paru aux Editions MASSON, FRANCE 1984. Les informations utiles fournies par cette batterie de filtres sont appliquées à l'organe d'utilisation 72 par l'intermédiaire d'un organe de sortie 75.

Conformément à l'invention, il est prévu dans la partie émission 10, un banc de filtres comportant "n" filtres anti-repliement F1, F2, F3,..., Fn, un organe à seuils 80 pour fournir une information kᵢ et pour agir ainsi sur l'organe de sortie 46 en fonction de l'information de sortie de l'analyseur de mouvement 48 et un multiplexeur d'information 85 pour fournir au circuit émetteur 50 outre les échantillons de sortie du circuit de sous-échantillonnage 40 l'information de sortie du circuit à seuils 80. Il est prévu aussi dans la partie réception 20 une batterie de filtres d'interpolation I1, I2, I3,..., In en correspondance avec les filtres F1, F2, F3,..., Fn, un circuit démultiplexeur 82 pour appliquer d'une part les échantillons reçus Yʹᵢ au banc de filtres 65 et d'autre part l'information kʹᵢ provenant de l'organe à seuils à la commande de l'organe de sortie 72.

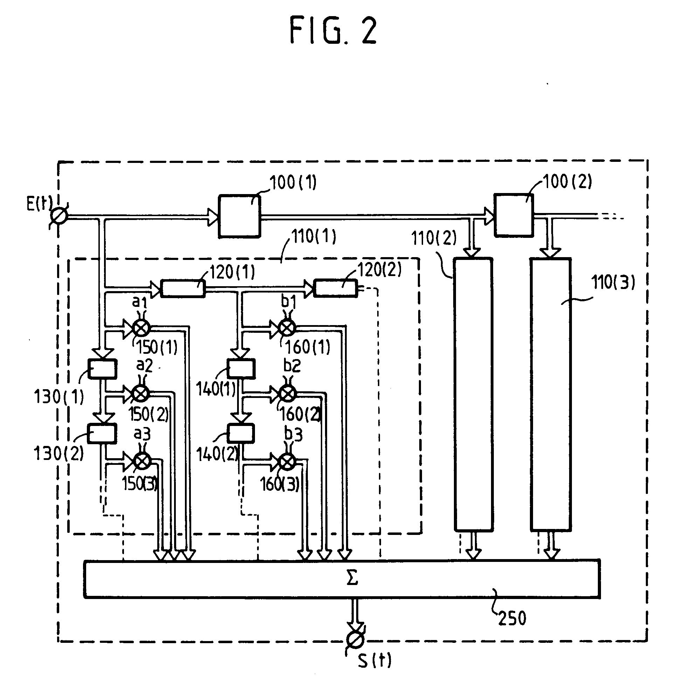

La structure des filtres anti-repliement F1, F2, ..., Fn et des filtres interpolateurs I1, I2, ..., In est représentée d'une manière générale à la figure 2. Ces structures sont celles de filtres numériques linéaires.

On rappelle à la figure 2 d'une manière générale la structure de tels filtres.

Cette structure comporte tout d'abord une succession de mémoires de trames 100(1), 100(2), ..., amenant chacune un retard égal à la durée d'une trame ; l'entrée de la mémoire 100(1) reçoit le signal numérique E(t) à traiter. A ces mémoires on associe des organes de sous-filtrage 110(1), 110(2), 110(3)..., . L'entrée de l'organe 110(1) est branchée à l'entrée de la mémoire 100(1), l'entrée de l'organe 110(2) à sa sortie et l'entrée de l'organe 110(3) à la sortie de la mémoire 100(2). Seule est montrée en détail la constitution de l'organe 110(1). Celui-ci se compose d'une succession de mémoires de ligne 120(1), 120(2), ..., chacune amenant un retard égal à la durée d'une ligne. Puis il est prévu à l'entrée de la mémoire 120(1) une première succession de mémoires de points d'images 130(1), 130(2), ..., amenant chacune un retard égal à la durée d'un élément d'image ; une deuxième succession de mémoires de points d'images 140(1), 140(2) est reliée à la sortie de la mémoire 120(1)... etc, ainsi que pour toutes les mémoires de lignes prévues. Des multiplicateurs 150(1), 150(2), 150(3) sont associés aux mémoires 130(1) et 130(2) pour effectuer le produit du signal d'entrée de la mémoire 130(1), du signal de sortie de cette même mémoire 130(1) et du signal de sortie de la mémoire 130(2) avec respectivement des coefficients de filtrage a1, a2, a3,... D'une manière semblable, des multiplicateurs 160(1), 160(2), 160(3) effectuent le produit du signal d'entrée de la mémoire 140(1), du signal de sortie de cette même mémoire et du signal de sortie de la mémoire suivante 140(2) avec respectivement des coefficients de filtrage b1, b2 et b3,... Un organe de sommation 250 fournit le signal de sortie S(t) en faisant la somme de tous les signaux provenant des multiplicateurs de tous les organes de sous-filtrage 110(1), 110(2), 110(3),...

Dans ce qui suit, toujours à titre d'exemple non limitatif, on décrit avec plus de détails un mode de réalisation préféré de l'invention relatif aux paramètres précités.

Selon ce mode de réalisation le banc de filtres anti-repliement 46 se compose de trois filtres F1, F2 et F3, et en correspondance, le banc de filtres d'interpolation se compose de trois filtres I1, I2 et I3.

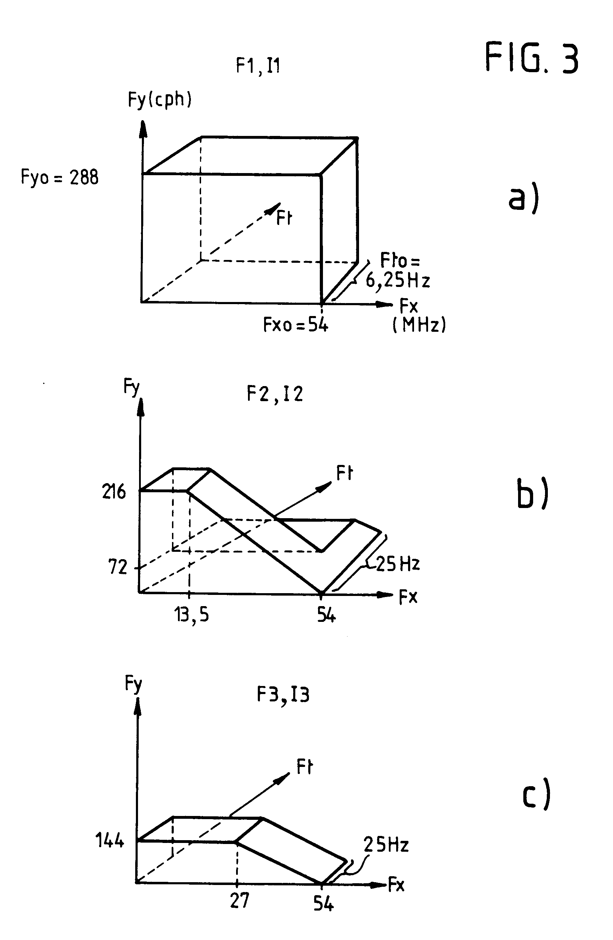

Les caractéristiques en fréquence de ces filtres sont représentées à la figure 3 en trois dimensions, selon trois axes Fx, Fy et Ft.

L'axe Fx est relatif à la définition horizontale de l'image et est gradué en fréquence (MHz).

L'axe Fy est relatif à la définition verticale de l'image et est gradué en cycle par hauteur (Cph).

L'axe Ft est relatif au temps et se mesure en Hz.

Les filtres F1 et I1 sont représentés en a à la figure 3. Les caractéristiques de transfert en fréquence de ces filtres ont la forme de parallélépipèdes rectangles ; dans l'exemple de réalisation préféré ce parallélépipède est caractérisé par :
Fx₀ = 54 MHz
Fy₀ = 288 Cph
Ft₀ = 6,25 Hz

Les filtres F2 et I2 montrés en b à la figure 3 se présentent avec un palier dans le plan Fy, Fx entre 0 et 13,5 MHz puis une région descendante jusqu'à 54 MHz et, dans le plan Fy, Ft se présentent avec un échelon de 0 à 6,25 Hz d'amplitude nominale 216 cph, puis un autre échelon d'amplitude 72 cph.

Les filtres F3, I3 montrés en c à la figure 3 présentent un palier dans le plan Fy, Fx d'amplitude 144 allant de 0 à 27 MHz puis une pente descendante jusqu'à 54 MHz.

L'analyseur de mouvement 48 qui détermine le filtre à utiliser parmi les filtres F1, F2 et F3 est par exemple d'un type décrit dans l'article "A Motion Vector Detector for MUSE Encoder" de Yuichi Ninomiya, paru dans IEEE 1986 INTERNATIONAL CONFERENCE ON COMMUNICATIONS, 1986, TORONTO (CANADA), 22 au 25 juin 1986, vol.2, pages 1280-1284.
Ainsi, à des blocs de points d'image est affectée une valeur de déplacement. L'organe à seuil fournit sur deux éléments binaires k1 et k2 l'indication de ce mouvement :
- mouvement pratiquement nul, c'est le filtre F1 qui est choisi,
- mouvement de faible ampleur, c'est le filtre F2,
- mouvement de forte ampleur, c'est le filtre F3.

Ces éléments binaires k1 et k2 sont transmis sur le canal de transmission 30 par le circuit émetteur 50. Pour cela on a prévu un multiplexeur d'information 85 pour insérer ces éléments binaires.

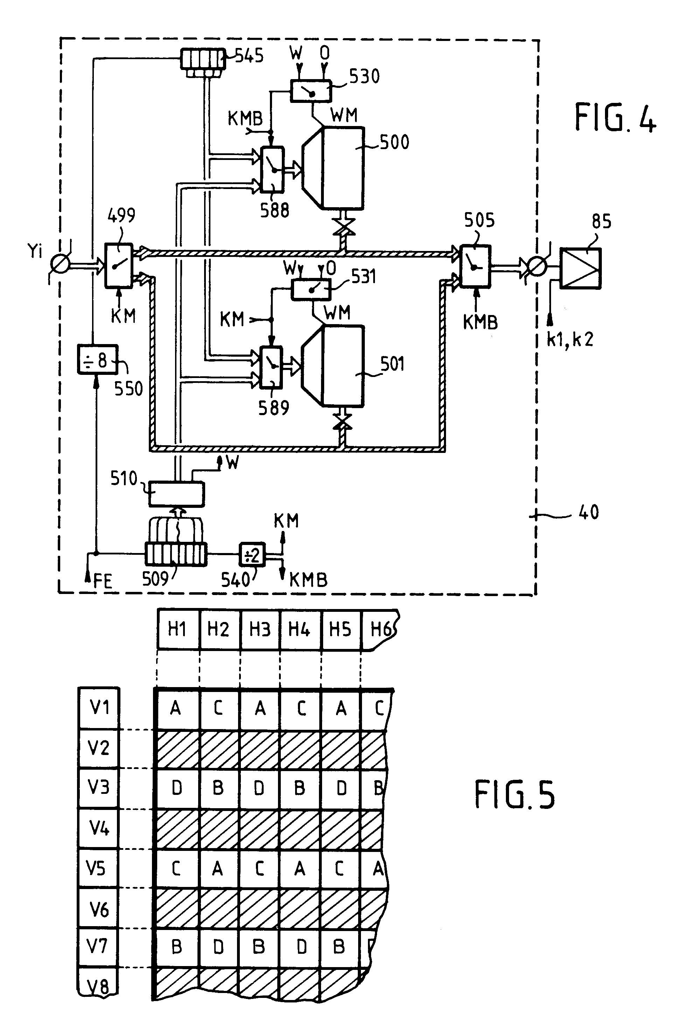

La figure 4 montre en détail l'organe de sous-échantillonnage 40.

Les échantillons de luminance Yᵢ se présentent à l'entrée d'un démultiplexeur 499 en vue d'être emmagasinées dans l'une des deux mémoires 500 et 501. Cet emmagasinage a lieu tour à tour dans ces deux mémoires, de sorte que lorsqu'une mémoire est en écriture, l'autre mémoire est en lecture. Un multiplexeur 505 permet d'appliquer les informations de l'une des mémoires 500 et 501 à l'entrée du circuit émetteur 50, via le multiplexeur 85. La position des démultiplexeur 499 et multiplexeur 505 est fixée respectivement par des signaux complémentaires KM et KMB indiquant ainsi que lorsque les informations Yi se trouvent à l'accès de données de la mémoire 500, l'accès de données de la mémoire 501 se trouve en relation avec l'entrée du circuit émetteur 50 et que lorsque l'accès de données de la mémoire 500 est à l'entrée du circuit 50, les informations Yi sont aux accès de données de la mémoire 501.

L'adressage en écriture de ces mémoires 500 et 501 est effectué au moyen d'un compteur 509 auquel est associé un circuit de transcodage 510, ceci afin d'effectuer un adressage sélectif dans les mémoires 500 et 501 selon des critères qui seront exposés plus loin. Le compteur 509 progresse au rythme de l'échantillonnage fixé par un signal FE issu par exemple de l'organe 35. Outre le code d'adresse d'écriture pour les mémoires 500 et 501, le signal W est dérivé pour valider l'écriture de ces mémoires ; ce signal est appliqué à la commande d'écriture WM des mémoires 500 et 501 par l'intermédiaire de multiplexeurs 530 et 531 à deux positions, commandés respectivement par les signaux KMB et KM. Les signaux KM et KMB proviennent d'une bascule 540 connectée en bout du compteur 509 ; comme la capacité de ce compteur correspond au nombre des échantillons ou éléments d'une image de haute définition, les signaux KM et KMB changent de valeur à chaque nouvelle image.

L'adressage en lecture des mémoires 500 et 501 est effectué directement au moyen d'un compteur 545 progressant au rythme des signaux provenant d'un diviseur de fréquence 550 divisant par huit le signal FE.

Pour appliquer le code de lecture ou d'écriture on utilise deux multiplexeurs 588 et 589 rattachés respectivement aux mémoires 500 et 501.

Il est facile d'établir pour l'homme de l'art le circuit de transcodage 510 en programmant une mémoire morte en fonction des considérations suivantes :
Tout d'abord, on rappelle que l'image numérisée se présente comme un tableau bidimensionnel constitué de points et de lignes. On va s'aider de la figure 5, qui montre une partie de ce tableau, pour expliquer la manière dont s'effectue le sous-échantillonnage.

Chaque point de ce tableau est repéré d'une part par un code d'emplacement horizontal H1, H2, H3, H4, H5, H6, ..., et, d'autre part, par un code d'emplacement vertical V1, V2, V3, ..., V7,...

Les échantillons Yᵢ arrivent dans l'ordre normal, élément d'image par élément d'image et ligne par ligne, c'est-à-dire qu'ils peuvent être représentés :
par H1,V1 ; H2,V1 ; H3,V1 ; ... jusqu'à la fin de la ligne V1, puis par H1,V2 ; H2,V2 ; H3,V2 ;... jusqu'à la fin de la ligne V2 et ainsi de suite pour toute la ligne.

Au moyen de circuits de transcodage, on va d'abord enregistrer les points repérés par A à la figure 5, c'est-à-dire les points correspondant à H1,V1 ; H3,V1 ; H5,V1 ; ... ; H2,V5 ; H4,V5 puis les points B : H2,V3 ; H4,V3 ; ... ; H1,V7 ; H3,V7 ; ensuite les points C : H2,V1 ; H4,V1 ; ... ; H1,V5 ; H3,V5 et enfin les points D : H1,V2 ; H3,V3 ; ... ; H5,V3 ; ... ; H2,V7... On notera que dans ce processus, tous les points situés sur les lignes paires V2, V4, ..., sont ignorés.

## Revendications

1. Système pour transmettre des images de télévision, dans lequel une partie émission (10) comporte un organe (35) pour fournir des informations d'images, des filtres anti-repliement pour filtrer lesdites informations d'images (F1, ..., Fn), un analyseur de mouvement d'image (48) pour fournir à partir des informations d'images une grandeur représentant le mouvement dans celles-ci, un organe de sortie (46) des filtres anti-repliement pour relier l'entrée d'un circuit de sous-échantillonnage (40) aux sorties des filtres, organe commandé à partir de la grandeur représentant le mouvement, un circuit multiplexeur d'informations (85) pour multiplexer les échantillons d'image provenant du circuit de sous-échantillonnage avec une information de seuils élaborée par un organe a' seuils (80) prévu pour traiter la grandeur représentant le mouvement et un circuit émetteur (50) pour transmettre sur un canal de transmission (30) les informations fournies par ledit multiplexeur (85), système dans lequel une partie réception (20) comporte un circuit récepteur (60) pour recevoir les informations transmises, un circuit démultiplexeur (82) pour reconstituer à partir des informations transmises, d'une part les échantillons d'images et d'autre part l'information de seuil dudit circuit à seuils, des filtres d'interpolation (I1, ..., In) pour fournir des suréchantillons par suréchantillonnage des échantillons d'image transmis, un organe de sortie (75) des filtres d'interpolation pour fournir l'information utile en fonction de ladite information de seuil transmise, caractérisé en ce que dans la partie émission le nombre des filtres anti-repliement est au moins trois et l'organe à seuils agit aussi sur l'organe de sortie des filtres anti-repliement, et dans la partie réception le nombre des filtres d'interpolation est au moins trois et le circuit démultiplexeur applique l'information de seuils transmise, à une commande de l'organe de sortie des filtres d'interpolation, tandis que les organes de sortie des filtres de la partie émission et de la partie réception sont des commutateurs.

2. Système pour transmettre des images de télévision selon la revendication 1, caractérisé en ce que l'information de mouvement est relative à un bloc de points d'images.

3. Système pour transmettre des images de télévision selon la revendication 1 ou 2, caractérisé en ce que lesdits filtres sont des filtres numériques linéaires.

4. Système pour transmettre des images de télévision selon l'une des revendications 1 à 3, caractérisé en ce que le nombre des filtres anti-repliement dans la partie émission est égal au nombre des filtres d'interpolation dans la partie réception.

5. Système pour transmettre des images de télévision selon la revendication 4, caractérisé en ce que lesdits nombres sont 3.

6. Emetteur convenant pour le système pour transmettre des images de télévision selon l'une des revendications 1 à 5, comportant un organe (35) pour fournir des informations d'images, des filtres anti-repliement pour filtrer lesdites informations d'images (F1, ..., Fn), un analyseur de mouvement d'image (48) pour fournir à partir des informations d'images une grandeur représentant le mouvement dans celles-ci, un organe de sortie (46) des filtres anti-repliement pour relier l'entrée d'un circuit de sous-échantillonnage (40) aux sorties des filtres commandé à partir de la grandeur représentant le mouvement, un circuit multiplexeur d'information (85) pour multiplexer les échantillons d'image provenant du circuit de sous-échantillonnage avec une information de seuils élaborée par un organe à seuils (80) prévu pour traiter la grandeur représentant le mouvement et un circuit émetteur (50) pour transmettre sur un canal de transmission (30) les informations fournies par ledit multiplexeur (85), caractérisé en ce que le nombre de filtres anti-repliement est au moins trois et l'organe à seuils agit aussi sur l'organe de sortie des filtres anti-repliement.

7. Procédé pour former un signal d'image de télévision mettant en oeuvre les étapes suivantes :
- élaboration de composantes d'informations d'images,
- élaboration d'informations de commande de filtrage à partir desdites composantes d'information d'image,
- élaboration de signaux d'images filtrés obtenus par filtrage anti-repliement pour lesdites composantes d'informations d'images selon une caractéristique de filtrage sélectionnée en fonction desdites informations de commande de filtrage, d'au moins trois caractéristiques de filtrage différentes,
- élaboration de signaux d'image sous-échantillonnés obtenus par sous-échantillonnage des signaux d'images filtrés et, enfin,
- élaboration du signal d'image de télévision obtenu par multiplexage de l'information de commande de filtrage avec les signaux d'image sous-échantillonnés.

8. Procédé selon la revendication 7, caractérisé en ce que l'information de commande de filtrage est affectée à des blocs d'images.

9. Récepteur convenant pour recevoir un signal d'image de télévision formé selon l'une des revendications 7, 8, comportant un circuit récepteur (60) pour recevoir les informations transmises, un circuit démultiplexeur (82) pour reconstituer à partir des informations transmises, d'une part les échantillons d'images et d'autre part des information de commande, des filtres d'interpolation (I1, ..., In) pour fournir des suréchantillons par suréchantillonnage des échantillons transmis, un organe de sortie (75) des filtres d'interpolation pour fournir l'information utile en fonction desdites informations de commande, caractérisé en ce que le nombre des filtres d'interpolation est au moins trois et le circuit démultiplexeur applique les informations de commande à une commande de l'organe de sortie des filtres d'interpolation.

10. Récepteur convenant pour recevoir un signal d'image de télévision formé selon l'une des revendications 7, 8, comprenant :
- des premiers moyens (60) pour recevoir des composantes d'information,
- des deuxièmes moyens (82) couplés auxdits premiers moyens pour démultiplexer lesdites composantes d'information afin de fournir, d'une part des composantes d'information d'image et d'autre part des informations de commande de filtrage,
- des troisièmes moyens (65) pour suréchantillonner et pour effectuer un filtrage d'interpolation desdites composantes d'information d'image selon au moins trois caractéristiques de filtrage différentes afin de fournir des signaux d'image interpolés et,
- des moyens de sortie (75) pour sélectionner en fonction de l'information de commande de filtrage les signaux d'images interpolés selon l'une desdites caractéristiques.

11. Récepteur selon la revendication 10, caractérisé en ce que les informations de commande de filtrage sont affectées à des blocs d'images.

## Claims

1. A television picture transmission system in which a transmitting section (10) comprises a picture information components producing member (35), anti-aliasing filters (F1, ..., Fn) for filtering said picture information components, a picture movement analyser (48) for producing on the basis of the picture information components a quantity representing the movement therein, an output member (46) of the anti-aliasing filters for coupling the input of a sub-sampling circuit (40) to outputs of the filters, said output member being controlled by the quantity representing the movement, an information multiplexer circuit (85) for multiplexing the picture samples from the sub-sampling circuit with a threshold information component produced by a threshold member (80) for processing the quantity representing the movement, and a transmitter circuit (50) for transmitting the information components provided by said multiplexer (85) via a transmission channel (30), in which system a receiving section (20) comprises a receiver circuit (60) for receiving transmitted information components, a demultiplexer circuit (82) for restoring, on the basis of the transmitted information components, the picture samples and the threshold information of said threshold circuit, interpolation filters (I1, ..., In) for supplying oversamples by oversampling the transmitted picture samples, an output member (75) of the interpolation filters for supplying the useful information as a function of said transmitted threshold information, characterized in that in the transmitting section the number of anti-aliasing filters is at least three and the threshold member also acts on the output member of the anti-aliasing filters, and in the receiving section the number of interpolation filters is at least three and the demultiplexer circuit applies the transmitted threshold information to a control input of the output member of the interpolation filters, while the filter output members of the transmitting and receiving sections are change-over switches.

2. A television picture transmission system as claimed in Claim 1, characterized in that the movement information relates to a block of pixels.

3. A television picture transmission system as claimed in Claim 1 or 2, characterized in that said filters are linear digital filters.

4. A television picture transmission system as claimed in any one of Claims 1 to 3, characterized in that the number of anti-aliasing filters in the transmitting section and the number of interpolation filters in the receiving section are identical.

5. A television picture transmission system as claimed in Claim 4, characterized in that said number of filters is equal to 3.

6. A transmitter suitable for the television picture transmission system as claimed in any one of Claims 1 to 5, comprising a picture information components producing member (35), anti-aliasing filters (F1, ..., Fn)for filtering said picture information components, a picture movement analyser (48) for producing on the basis of the picture information components a quantity representing the movement therein, an output member (46) of the anti-aliasing filters for coupling the input of a sub-sampling circuit (40) to outputs of the filters, said output member being controlled by the quantity representing the movement, an information multiplexer circuit (85) for multiplexing the picture samples from the sub-sampling circuit with a threshold information component produced by a threshold member (80) for processing the quantity representing the movement, and a transmitter circuit (50) for transmitting the information components provided by said multiplexer (85), characterized in that the number of anti-aliasing filters is at least three and the threshold member also acts on the output member of the anti-aliasing filters.

7. A method of forming a television picture signal, in which the following steps are carried out:
- producing picture information components,
- producing a filtering control information on the basis of said picture information components,
- producing filtered picture signals obtained by anti-alias filtering said picture information components in accordance with a filtering characteristic selected as a function of said filtering control information from at least three different filtering characteristics,
- producing sub-sampled picture signals obtained by sub-sampling the filtered picture signals, and
- producing a television picture signal obtained by multiplexing the filtering control information with the sub-sampled picture signals.

8. A method as claimed in Claim 7, characterized in that the filtering control information is assigned to picture blocks.

9. A receiver suitable for receiving a television picture signal formed in accordance with a method as claimed in any one of the Claims 7,8, comprising a receiver circuit (60) for receiving transmitted information components, a demultiplexer circuit (82) for restoring, on the basis of the transmitted information components, the picture samples and the control information components, interpolation filters (I1, ..., In) for supplying oversamples by oversampling the transmitted picture samples, an output member (75) of the interpolation filters for supplying the useful information as a function of said control information components, characterized in that the number of interpolation filters is at least three and the demultiplexer circuit applies the control information components to a control input of the output member of the interpolation filters.

10. A receiver suitable for receiving a television picture signal formed in accordance with a method as claimed in any one of Claims 7,8, comprising:
- first means (60) for receiving information components,
- second means (82) coupled to said first means for demultiplexing said information components in order to supply picture information components and filtering control information,
- third means (65) for oversampling and for interpolation filtering of said picture information components in accordance with at least three different filtering characteristics in order to supply interpolated picture signals, and
- output means (75) for selecting, as a function of the filtering control information, the picture signals interpolated in accordance with one of said characteristics.

11. A receiver as claimed in Claim 10, characterized in that the filtering control information is assigned to picture blocks.

## Patentansprüche

1. System zur Übertragung von Fernsehbildern, bei dem ein Sendeteil (10) ein Bildinformation erzeugendes Element (35), Anti-Faltfilter (F1, ..., Fn) zum Filtern der genannten Bildinformation, einen Bildbewegungsanalysator (48) zum aus den Bildinformationen Liefern eines Wertes, der die Bewegung in denselben darstellt, ein Ausgangselement (46) der Anti-Faltfilter zum Verbinden des Eingangs eines Unter-Abtastkreises (40) mit den Ausgängen der Filter, wobei dieses Element durch den die Bewegung darstellenden Wert gesteuert wird, einen Informationsmultiplexerkreis (85) zum Multiplexen der Bildabtastwerte aus dem Unter-Abtastkreis mit einer Schwelleninformation, die durch ein Schwellenelement (80) ausgearbeitet worden ist, das zum Behandeln des die Bewegung darstellenden Wertes vorgesehen ist, sowie einen Sendekreis (50) aufweist um über einen Sendekanal (30) die durch den genannten Multiplexer (85) erhaltenen Informationen auszusenden, wobei in diesem System ein Empfangsteil (20) einen Empfangskreis (60) zum Empfangen der ausgesendeten Informationen, einen Demultiplexerkreis (82) zum aus den übertragenen Informationen Rekonstruieren einerseits der Bildabtastwerte und andererseits der Schwelleninformation des genannten Schwellenkreises, Interpolationsfilter (I1, ..., In) zum durch Über-Abtastung der übertragenen Bildabtastwerte Liefern von Über-Abtastwerten, und ein Ausgangselement (75) der Interpolationsfilter zum in Funktion der genannten übertragenen Schwelleninformation Liefern nützlicher Information aufweist, dadurch gekennzeichnet, daß in dem Sendeteil die Anzahl Anti-Faltfilter mindestens drei beträgt und daß das Schwellenelement ebenfalls auf das Ausgangselement der Anti-Faltfilter einwirkt, und daß in dem Empfangsteil die Anzahl Interpolationsfilter mindestens drei beträgt und daß der Demultiplexerkreis die übertragene Schwelleninformation einem Steuerelement für das Ausgangselement der Interpolationsfilter zuführt, während die Filterausgangselemente der Sende- und Empfangsteile Schalter sind.

2. System zur Übertragung von Fernsehbildern nach Anspruch 1, dadurch gekennzeichnet, daß die Bewegungsinformation sich auf ein Bildpunkteblock bezieht.

3. System zur Übertragung von Fernsehbildern nach Anspruch 1 oder 2, dadurch gekennzeichnet, daß die genannten Filter lineare Digitalfilter sind.

4. System zur Übertragung von Fernsehbildern nach einem der Ansprüche 1 bis 3, dadurch gekennzeichnet, daß die Anzahl Anti-Faltfilter in dem Sendeteil der Anzahl Interpolationsfilter in dem Empfangsteil entspricht.

5. System zur Übertragung von Fernsehbildern nach Anspruch 4, dadurch gekennzeichnet, daß die genannte Anzahl 3 beträgt.

6. Sender zum Gebrauch in dem System zur Übertragung von Fernsehbildern nach einem der Ansprüche 1 bis 5, mit einem Element (35) zum Liefern von Bildinformation, mit Anti-Faltfiltern (F1, ..., Fn) zum Filtern der genannten Bildinformation, einem Bildbewegungsanalysator (48) zum aus den Bildinformationen Liefern eines Wertes, der die Bewegung in denselben darstellt, einem Ausgangselement (46) der Anti-Faltfilter zum Verbinden des Eingangs eines Unter-Abtastkreises (40) mit den Ausgängen der Filter, wobei dieses Element durch den die Bewegung darstellenden Wert gesteuert wird, einem Informationsmultiplexerkreis (85) zum Multiplexen der Bildabtastwerte aus dem Unter-Abtastkreis mit einer Schwelleninformation, die durch ein Schwellenelement (80) ausgearbeitet worden ist, das zum Behandeln des die Bewegung darstellenden Wertes vorgesehen ist, sowie mit einem Sendekreis (50) um über einen Sendekanal (30) die durch den genannten Multiplexer (85) erhaltenen Informationen auszusenden, dadurch gekennzeichnet, daß die Anzahl Anti-Faltfilter mindestens drei beträgt und daß das Schwellenelement ebenfalls das Ausgangselement der Anti-Faltfilter beeinflußt.

7. Verfahren zum Bilden eines Fernsehbildsignals, das aus den nachfolgenden Verfahrensschritten besteht:
- das Ausarbeiten von Bildinformationsanteilen,
- das Ausarbeiten von Filtersteuerinformationen aus den genannten Bildinformationsanteilen,
- das Ausarbeiten von durch Anti-Faltfilterung für die genannten Bildinformationsanteile erhaltenen gefilterten Bildsignale entsprechend einer Filterkennlinie, die je nach den genannten Filtersteuerinformationen aus mindestens drei verschiedenen Filterkennlinien selektiert worden ist,
- das Ausarbeiten von durch Unter-Abtastung der gefilterten Bildsignale erhaltenen unter-abgetasteten Bildsignale und, zum Schluß
- das Ausarbeiten eines durch Multiplexen der Filtersteuerinformation mit den unter-abgetasteten Bildsignalen erhaltenen Fernsehbildsignals.

8. Verfahren nach Anspruch 7, dadurch gekennzeichnet, daß die Filtersteuerinformation Bildblöcken zugeordnet ist.

9. Empfänger zum Empfangen eines Fernsehbildsignals gebildet nach einem der Ansprüche 7, 8, mit einem Empfangskreis (60) zum Empfangen der ausgesendeten Informationen, einem Demultiplexerkreis (82) zum aus den übertragenen Informationen Rekonstruieren einerseits der Bildabtastwerte und andererseits der Steuerinformation, mit Interpolationsfiltern (I1, ..., In) zum durch Über-Abtastung der übertragenen Bildabtastwerte Liefern von Über-Abtastwerten, und mit einem Ausgangselement (75) der Interpolationsfilter zum in Funktion der genannten übertragenen Steuerinformation Liefern nützlicher Information, dadurch gekennzeichnet, daß die Anzahl Interpolationsfilter mindestens drei beträgt und daß der Multiplexerkreis die Steuerinformationen einem Steuerelement des Ausgangselementes der Interpolationsfilter zuführt.

10. Empfänger zum Empfangen eines Fernsehbildsignals gebildet nach einem der Ansprüche 7, 8, der die nachfolgenden Elemente aufweist:
- erste Mittel (60) zum Empfangen von Informationsanteilen,
- zweite Mittel (82), die mit den genannten ersten Mitteln gekoppelt sind, zum Demultiplexen der genannten Informationsanteile, um einerseits Bildinformationsanteile und andererseits Filtersteuerinformationen zu liefern,
- dritte Mittel (65) zum Über-Abtasten und zum Durchführen einer Interpolationsfilterung der genannten Bildinformationsanteile entsprechend mindestens drei verschiedenen Filterkennlinien zum Liefern interpolierter Bildsignale, und
- Ausgangsmittel (75) zum je nach der Filtersteuerinformation Selektieren der interpolierten Bildsignale entsprechend einer der genannten Kennlinien.

11. Empfänger nach Anspruch 10, dadurch gekennzeichnet, daß die Filtersteuerinformationen Bildblöcken zugeordnet sind.
